# EUROPEAN PATENT SPECIFICATION

(11) **EP 3 462 310 B1**
(45) Date of publication and mention of the grant of the patent: **11.11.2020**
(21) Application number: 18196990.8
(22) Date of filing: 26.09.2018
(51) Int. Cl.: G06F 9/451, G06F 8/38

(54) **MIXED REALITY SYSTEM SUPPORTING VIRTUAL REALITY APPLICATION AND DISPLAY THEREOF**
SYSTEM FÜR GEMISCHTE REALITÄT ZUR UNTERSTÜTZUNG VON ANWENDUNGEN DER VIRTUELLEN REALITÄT UND ANZEIGE DAVON
SYSTÈME DE RÉALITÉ MIXTE SUPPORTANT UNE APPLICATION DE RÉALITÉ VIRTUELLE ET AFFICHAGE ASSOCIÉ

(30) Priority: 02.10.2017 TW 106134067
(43) Date of publication of application: 03.04.2019
(73) Proprietor: Acer Incorporated, New Taipei City 221 (TW)
(72) Inventor: LIN, Hsi, New Taipei City 221 (TW); YANG, Chao-Kuang, New Taipei City 221 (TW)
(74) Representative: Haseltine Lake Kempner LLP

(56) References cited:
- US-A1- 2002 154 214
- US-A1- 2014 160 001
- US-B1- 7 487 516

## Description

### BACKGROUND OF THE INVENTION

### Field of the Invention

The invention relates to a mixed reality (MR) system and a display method of the MR system, and particularly relates to a MR system supporting virtual reality (VR) applications and a display method of the MR system.

### Description of Related Art

MR is the merging of real and virtual worlds to produce new environments where physical and virtual objects co-exist and interact in real time. MR applications currently on the market are mainly built on the Universal Windows Platform (UWP), and yet the consumers are less interested due to minimal available MR contents.

United States patent application US 2014/0160001 discloses a method for presenting a mixed reality environment via a head-mounted display device. United States patent US 7,487,516 discloses displaying surface data using a graphics application that is incompatible with the graphics application that was used to produce the surface data. United States patent application US 2002/0154214 discloses a virtual reality game system and method which use pseudo drivers to generate stereo vision outputs for a 3D stereoscopic display from game software normally intended for output to a 2D display of a conventional game console or PC.

### SUMMARY OF THE INVENTION

Accordingly, the embodiments of the invention provide a MR system supporting VR applications and a display method of the MR system capable of combining low-cost hardware and a VR platform to bring forth the advantage of MR products.
According to an embodiment, a display method of a MR system is applicable to the MR system including a processing device and a MR headset. The processing device provides a first application programming interface (API) that runs VR contents and a second API that runs MR contents, and the second API is associated with the MR headset. The method includes to obtain a first MR content by the processing device, to inform the first API about a display-related setting of the MR headset by the processing device through the second API, to render first texture data corresponding to the first VR content by the processing device according to the display-related setting through the first API, to create and send a share handle to the second API by the processing device, and to display the first texture data on the MR headset by the processing device through the second API by using the share handle.

According to an embodiment of the invention, a MR system includes a processing device and a MR headset. The processing device is connected to the MR headset and provides a first API that runs VR contents and a second API that runs MR contents. The second API is associated with the MR headset. The processing device is configured to perform the aforesaid display method of the MR system.

According to an embodiment of the invention, a MR system includes a processing device and a MR headset. The processing device is built-in in the MR headset and provides a API that runs VR contents and a second API that runs MR contents. The second API is associated with the MR headset. The processing device is configured to perform the aforesaid display method of the MR system.

In order to make the aforementioned and other features and advantages of the invention comprehensible, several exemplary embodiments accompanied with figures are described in detail below. The invention is set out in the appended set of claims.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block diagram illustrating a MR system according to an embodiment of the invention.
FIG. 2 is a flowchart illustrating a display method of a MR system according to an embodiment of the invention.
FIG. 3 is a function block diagram illustrating a display method of a MR system according to an embodiment of the invention.

### DESCRIPTION OF THE EMBODIMENTS

Several embodiments of the invention are described in detail below with reference to the accompanying figures. In terms of the reference numerals used in the following descriptions, the same reference numerals in different figures should be considered as representing the same or similar elements. These embodiments only constitute part of the invention, and do not present all the possible embodiments of the invention. More specifically, these embodiments only serve as examples of the method and the system falling within the scope of the claims of the invention.

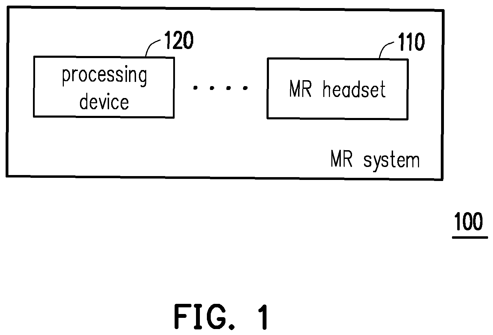

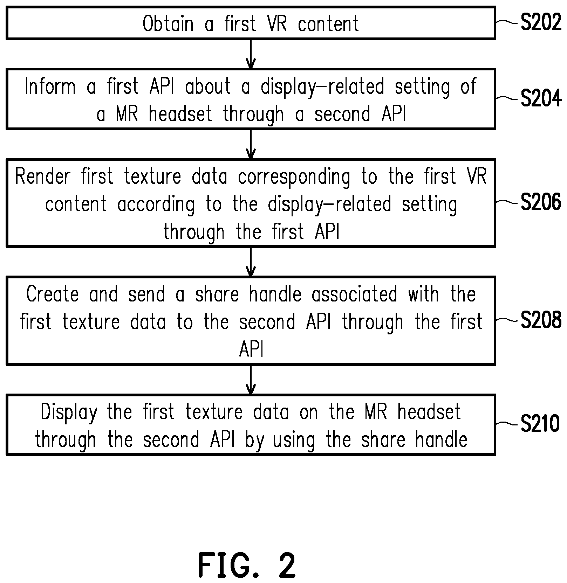

FIG. 1 is a block diagram illustrating a MR system according to an embodiment of the invention. The components and their configuration of the MR system are first introduced in FIG. 1. The functionalities of the components are disclosed in more detail in conjunction with FIG. 2.

Referring to FIG. 1, a MR system 100 includes a processing device 110 and a MR headset 120.

In the embodiment, the processing device 110 may be a computing device having a computing capability and including a processor, such as a file server, a database server, an application server, a workstation, a personal computer, a laptop computer. The processor may be a north bridge, a south bridge, a field programmable array (FPGA), a programmable logic device (PLD), an application specific integrated circuit (ASIC), a central processing unit (CPU), an application processor (AP), other programmable general-purpose or specific-purpose microprocessors, a digital signal processor (DSP), a graphics processing unit (GPU), other similar devices, or a combination of these devices. The processing device 110 may run MR contents to blend virtual scenes, objects, and characters into reality to create a whole-new environment, and may communicate with the MR headset 120 to allow the user to interact in the MR world.

The processing device 110 further includes a data storage device and a communication interface as known per se. The data storage device may be a non-transitory, volatile, or non-volatile memory of any type and configured to store buffer data, permanent data, and compiled program codes for executing the functions of the processing device 110. In addition, the data storage device may be an external hard drive, a cloud storage, or other external recording devices which the processing device 110 can access. The communication interface may support any wired connection or wireless communication standard to connect with other devices.

The MR headset 120 may be a head-mounted display or glasses with a built-in head tracking system. The MR headset 120 at least includes an integrated display, a motion sensor, a positioning device, and a communication interface. The display may be, for example, a liquid crystal display (LCD), a light emitting diode (LED) display, or other similar devices. The motion sensor may be an accelerometer (e.g., a gravity sensor), a gyroscope (e.g., a gyroscope sensor), or any other sensors capable of detecting a linear movement and a rotational movement of the MR headset 120. The positioning device may be an image sensor, a depth sensor, or a combination thereof for locating the MR headset 120. The communication interface may support any wired connection or wireless communication standard for data transmission with the processing device 110.

In the embodiment, the MR headset 120 may output sensed data to the processing device 110 through the communication interface in a conventional wired or wireless manner, and the processing device 110 may transmit MR contents to the display of the MR headset 120 to present the MR contents. In another embodiment, the processing device 110 and the MR headset 120 may be integrated into a single device. In other words, the processing device 110 is built-in in the MR headset 120 to form an all-in-one system, and yet the invention is not limited in this regard.

In the embodiment, the processing device 110 may provide a first application architecture platform and a second application architecture platform, where the two architecture platforms are not compatible. Herein, a first application programming interface (API) may run VR contents on the first application architecture platform, and a second API may run MR contents on the second application architecture platform and display the MR contents on the MR headset 120. In addition, it is assumed that the first application architecture platform and the second application architecture platform respectively have multimedia APIs of their own, and the two have a common runtime environment at the respective bottom layers.

In the following, the embodiments are described with reference to the respective components of the MR system 100 of FIG. 1, and the detailed steps of the MR system 100 supporting VR contents are described with reference to FIG. 2, which is a flowchart illustrating a display method of a MR system according to an embodiment of the invention.

Referring to FIG. 1 and FIG. 2, the processing device 110 would obtain a first VR content (Step S202). Here, the first VR content may be a VR content relating to, for example, gaming or movies downloaded from a VR content platform of a third-party by the processing device 110. In other embodiments, the first VR content may be pre-stored in the memory of the processing device 110 or received from other devices or storage media.

Then, the processing device 110 would inform the first API about a display-related setting of the MR headset 120 through the second API (Step S204). Specifically, since the first VR content is rendered based on the first API, the second API may inform the first API about relevant settings of the MR headset 120, such as a virtual space measurement, a screen solution, to ensure that the image is eventually displayed on the MR headset 120 in a decent visual effect.

Next, the processing device 110 would render first texture data corresponding to the first VR content according to the display-related setting of the MR headset 120 through the first API (Step S206). Herein, the first API may render texture data (i.e., the first texture data) respectively corresponding to left and right eyes in the MR headset 120 by using a 3D graphics API in the multimedia API.

Next, the processing device 110 would create and send a share handle associated with the first texture data to the second API (Step S208). The share handle may represent an identifier of the first texture data and a specific authorization for accessing the first texture data. Accordingly, the processing device 110 would display the first texture data on the MR headset 120 through the second API by using the share handle (Step S210). In other words, the second API may directly use the first texture data rendered by the first API by using the share handle and display the first texture data to the left and right eyes in the MR headset 120.

It should be noted that, conventionally, it is often to perform encoding and decoding during image streaming. As the quality of image stream becomes higher, the system resources consumed for encoding and decoding are accordingly increased. Moreover, since the encoded image stream has a fixed resolution and data format, the receiving end would not only decode the encoded image stream but would also perform additional processes such as optical calibration, color calibration, and morphing. On the other hand, in the embodiment, since the second API directly obtains the original first texture data rendered by the first API according to the display-related setting of the MR headset 120, no additional encoding, decoding and image correction processes is required so that efficiency loss is significantly reduced. Besides, the second API may still optionally perform image morphing on the received first texture data or adjust the data format of the first texture data for a more comprehensive and adaptive image processing result.

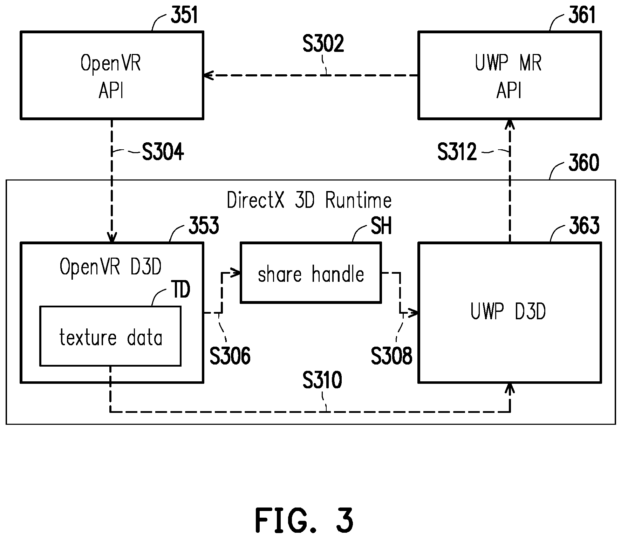

Details of how the method proposed in FIG. 2 applies to the Microsoft Windows operating system is described with reference to FIG. 3, which is a functional block diagram illustrating a display method of a MR system according to an embodiment of the invention. It should be mentioned beforehand that, Windows Mixed Reality App currently provided by Microsoft is built on the Universal Windows Platform (UWP), and yet only minimal MR contents are available. Currently, the platform with the most VR contents is the Steam digital gaming platform. However, the hardware supported by the Steam is a VR system requiring a certain amount of space to install the positioning device for tracking a VR headset, and the VR contents provided by the Steam are more suitable to be executed on the traditional application architecture platform such as Win32. In other words, some programs may be incompatible on the Win32 architecture platform and the UWP platform. In the embodiment, it is assumed that the first application architecture platform is Win32, and the second application architecture platform is UWP. Also, it is assumed that the first API is the OpenVR API executable on the Win32 architecture platform, and the second API is the UWP mixed reality API executable on the UWP architecture platform. The two architecture platforms respectively adopt DirectX as the multimedia APIs of their own, and the two have a common runtime environment at the respective bottom layers.

Referring to FIGs. 1 and 3, it is assumed that the processing device 120 has already obtained a VR content from, for example, the Steam digital gaming platform. A UWP MR API 361 would first inform an OpenVR API 351 about the display-related setting of the MR headset 120 (Step S302). Then, the OpenVR API 351 would render texture data TD for the left and right eyes by using a 3D graphics API, i.e., an OpenVR D3D 353, in DirectX (Step S304). Since the runtime environment, namely a DirectX 3D runtime 360, at the respective bottom layers is a common runtime environment, the OpenVR API 351 would create a share handle SH for the texture data for the left and right eyes (Step S306) so as to send the share handle SH to a 3D graphics API, namely an UWP D3D 363, in Direct X (Step S308). Then, the UWP D3D 363 would directly use the texture data TD for the left and right eyes rendered by the OpenVR D3D 353 by using the share handle SH (Step S310) and display the texture data TD for the left and right eyes on the MR headset 120 (Step S312). Details of Steps S302 to S312 may be referred to relevant descriptions of FIG. 2 and would not be repeated for brevity purposes.

In summary, in the MR system supporting VR applications and the display method thereof proposed in the invention, since a common runtime environment is shared by different architecture platforms at their respective bottom layers, the share handle mechanism allows the MR system to support VR contents. In this way, the embodiments of the invention are able to combine low-cost hardware and a VR platform to bring forth the advantage of MR products.

## Claims

1. A display method of a mixed reality, MR, system (100) supporting virtual reality, VR, applications, wherein the MR system (100) comprises a processing device (120) and a MR headset (110), wherein the processing device (100) provides a first application programming interface, API, (351) that runs VR contents and a second API (361) that runs MR contents, wherein the second API (361) is associated with the MR headset (110), and wherein the method comprises:
providing a first application architecture platform and a second application architecture platform by the processing device, wherein the first API (351) is able to run the VR contents on the first application architecture platform, wherein the second API (361) is able to run the MR contents on the second application architecture platform, wherein the first application architecture platform and the second application architecture platform respectively comprise a first multimedia API and a second multimedia API, and wherein the first multimedia API and the second multimedia API have a common runtime (360) at respective bottom layers;
obtaining a first VR content by the processing device (120);
informing the first API (351) about a display-related setting of the MR headset (110) through the second API (361) by the processing device (120);
rendering first texture data (TD) corresponding to the first VR content according to the display-related setting through the first API (351) by the processing device (120);
creating and sending a share handle (SH) associated with the first texture data (TD) to the second API (361) through the first API (351) via the first multimedia API and the second multimedia API having the common runtime (360) by the processing device (120); and
displaying the first texture data (TD) on the MR headset (110) through the second API (361) by using the share handle (SH) by the processing device (120) (S210).

2. The method according to claim 1, wherein the step of obtaining the first VR content by the processing device (120) comprises:
downloading the first VR content from a VR content platform of a third party by the processing device (120).

3. The method according to claim 1, wherein the display-related setting comprises at least one of a screen resolution and a virtual space measurement of the MR headset (110).

4. The method according to claim 1, wherein the step of rendering the first texture data (TD) corresponding to the first VR content according to the display-related setting through the first API (351) by the processing device (120) comprises:
rendering the first texture data (TD) corresponding to the first VR content according to the display-related setting by using a 3D graphics API (353) of the first multimedia API through the first API (351) by the processing device (120).

5. The method according to claim 1, wherein the step of creating and sending the share handle associated with the first texture data to the second API (361) through the first API (351) by the processing device (120) comprises:
creating the share handle (SH) by using the 3D graphics API (353) of the first multimedia API through the first API (351) by the processing device (120); and
sending the share handle (SH) to a 3D graphics API (363) of the second multimedia API (361) by the 3D graphics API (353) of the first multimedia API (351) via the runtime (360).

6. The method according to claim 5, wherein the step of displaying the first texture data (TD) on the MR headset (110) through the second API (361) by using the share handle (SH) by the processing device (120) comprises:
directly accessing the first texture data (TD) by using the share handle (SH) through the 3D graphics API (363) of the second multimedia API through the second API (361) and displaying the first texture data (TD) on the MR headset (110) by the processing device (120).

7. The method according to claim 1, wherein the second application architecture platform is a Universal Windows Platform (UWP), and wherein the first application architecture platform is an architecture platform other than the UWP.

8. A mixed reality, MR, system (100) supporting virtual reality, VR, applications, the system comprising:
a MR headset (110); and
a processing device (120), wherein the processing device (120) provides a first application programming interface, API, (351) that runs VR contents and a second API (361) that runs MR contents, wherein the second API (361) is associated with the MR headset (110), and wherein the processing device (120) is configured to:
provide a first application architecture platform and a second application architecture platform, wherein the first API (351) is able to run the VR contents on the first application architecture platform, wherein the second API (361) is able to run the MR contents on the second application architecture platform, wherein the first application architecture platform and the second application architecture platform respectively comprise a first multimedia API and a second multimedia API, and wherein the first multimedia API and the second multimedia API have a common runtime (360) at respective bottom layers;
obtain a first VR content;
inform the first API (351) about a display-related setting of the MR headset (110) through the second API (361);
render first texture data (TD) corresponding to the first VR content according to the display-related setting through the first API (351);
create and send a share handle (SH) associated with the first texture data (TD) to the second API (361) through the first API (351) via the first multimedia API and the second multimedia API having the common runtime (360); and
display the first texture data (TD) on the MR headset (110) through the second API (361) by using the share handle (SH).

9. The MR system (100) according to claim 8, wherein the processing device (120) downloads the first VR content from a VR content platform of a third party.

10. The MR system (100) according to claim 8, wherein the display-related setting comprises at least one of a screen resolution and a virtual space measurement of the MR headset (110).

11. The MR system (100) according to claim 8, wherein the processing device (120) is configured to render the first texture data (TD) corresponding to the first VR content according to the display-related setting by using a 3D graphics API (353) of the first multimedia API through the first API (351).

12. The MR system (100) according to claim 8, wherein the processing device (120) is configured to create the share handle (SH) by using the 3D graphics API (353) of the first multimedia API through the first API (351) and to send the share handle (SH) to a 3D graphics API (363) of the second multimedia API (361) by the 3D graphics API (353) of the first multimedia API (351) via the runtime (360).

13. The MR system (100) according to claim 12, wherein the processing device (120) is configured to directly access the first texture data (TD) by using the share handle (SH) through the 3D graphics API (363) of the second multimedia API through the second API (361) and displays the first texture data (TD) on the MR headset (110).

## Patentansprüche

1. Anzeigeverfahren eines Systems (100) für gemischte Realität, MR, zur Unterstützung von Anwendungen der virtuellen Realität, VR, wobei das MR-System (100) eine Verarbeitungsvorrichtung (120) und ein MR-Headset (110) umfasst, wobei die Verarbeitungsvorrichtung (100) eine erste Programmierschnittstelle, API, (351), die VR-Inhalte ausführt, und eine zweite API (361), die MR-Inhalte ausführt, bereitstellt, wobei die zweite API (361) dem MR-Headset (110) zugeordnet ist, und wobei das Verfahren umfasst:
Bereitstellen einer ersten Anwendungsarchitektur-Plattform und einer zweiten Anwendungsarchitektur-Plattform mittels der Verarbeitungsvorrichtung, wobei die erste API (351) dazu in der Lage ist, den VR-Inhalt auf der ersten Anwendungsarchitektur-Plattform auszuführen, wobei die zweite API (361) dazu in der Lage ist, die MR-Inhalte auf der zweiten Anwendungsarchitektur-Plattform auszuführen, wobei die erste Anwendungsarchitektur-Plattform und die zweite Anwendungsarchitektur-Plattform jeweils eine erste Multimedia-API und eine zweite Multimedia-API umfassen, und wobei die erste Multimedia-API und die zweite Multimedia-API eine gemeinsame Runtime (360) an jeweiligen unteren Schichten aufweisen;
Erhalten eines ersten VR-Inhalts mittels der Verarbeitungsvorrichtung (120);
Informieren der ersten API (351) über eine anzeigebezogene Einstellung des MR-Headsets (110) durch die zweite API (361) mittels der Verarbeitungsvorrichtung (120);
Rendern von ersten Texturdaten (TD), die dem ersten VR-Inhalt entsprechen, gemäß der anzeigebezogenen Einstellung durch die erste API (351) mittels der Verarbeitungsvorrichtung (120);
Erzeugen und Senden eines Freigabe-Handles (SH), das den ersten Texturdaten (TD) zugeordnet ist, an die zweite API (361) durch die erste API (351) über die erste Multimedia-API und die zweite Multimedia-API, die die gemeinsame Runtime (360) aufweisen, mittels der Verarbeitungsvorrichtung (120); und
Anzeigen der ersten Texturdaten (TD) auf dem MR-Headset (110) durch die zweite API (361) unter Verwendung des Freigabehandles (SH) mittels der Verarbeitungsvorrichtung (120) (S210).

2. Verfahren nach Anspruch 1, wobei der Schritt des Erhaltens des ersten VR-Inhalts mittels der Verarbeitungsvorrichtung (120) umfasst:
Herunterladen des ersten VR-Inhalts von einer VR-Inhaltsplattform eines Drittanbieters mittels der Verarbeitungsvorrichtung (120).

3. Verfahren nach Anspruch 1, wobei die anzeigebezogene Einstellung mindestens eine Bildschirmauflösung und eine virtuelle Raumabmessung des MR-Headsets (110) umfasst.

4. Verfahren nach Anspruch 1, wobei der Schritt des Renderns der ersten Texturdaten (TD), die dem ersten VR-Inhalt entsprechen, gemäß der anzeigebezogenen Einstellung durch die erste API (351) mittels der Verarbeitungsvorrichtung (120) umfasst:
Rendern der ersten Texturdaten (TD), die dem ersten VR-Inhalt entsprechen, gemäß der anzeigebezogenen Einstellung unter Verwendung einer 3D-Grafik-API (353) der ersten Multimedia-API durch die erste API (351) mittels der Verarbeitungsvorrichtung (120).

5. Verfahren nach Anspruch 1, wobei der Schritt des Erzeugens und Sendens des Freigabehandles, das den ersten Texturdaten zugeordnet ist, an die zweite API (361) durch die erste API (351) mittels der Verarbeitungsvorrichtung (120) umfasst:
Erzeugen des Freigabe-Handles (SH) unter Verwendung der 3D-Grafik-API (353) der ersten Multimedia-API durch die erste API (351) mittels der Verarbeitungsvorrichtung (120); und
Senden des Freigabe-Handles (SH) an eine 3D-Grafik-API (363) der zweiten Multimedia-API (361) mittels der 3D-Grafik-API (353) der ersten Multimedia-API (351) über die Runtime (360) .

6. Verfahren nach Anspruch 5, wobei der Schritt des Anzeigens der ersten Texturdaten (TD) auf dem MR-Headset (110) durch die zweite API (361) unter Verwendung des Freigabehandles (SH) mittels der Verarbeitungsvorrichtung (120) umfasst:
direktes Zugreifen auf die ersten Texturdaten (TD) unter Verwendung des Freigabehandles (SH) durch die 3D-Grafik-API (363) der zweiten Multimedia-API durch die zweite API (361) und Anzeigen der ersten Texturdaten (TD) auf dem MR-Headset (110) mittels der Verarbeitungsvorrichtung (120).

7. Verfahren nach Anspruch 1, wobei die zweite Anwendungsarchitektur-Plattform eine universelle Windows-Plattform (UWP) ist, und wobei die erste Anwendungsarchitektur-Plattform eine andere Architekturplattform als die UWP ist.

8. System (100) für gemischte Realität, MR, zur Unterstützung von Anwendungen der virtuellen Realität, VR, wobei das System umfasst:
ein MR-Headset (110); und
eine Verarbeitungsvorrichtung (120), wobei die Verarbeitungsvorrichtung (120) eine erste Anwendungsprogrammierschnittstelle, API, (351), die VR-Inhalte ausführt, und eine zweite API (361), die MR-Inhalte ausführt, bereitstellt, wobei die zweite API (361) dem MR-Headset (110) zugeordnet ist, und wobei die Verarbeitungsvorrichtung (120) konfiguriert ist zum:
Bereitstellen einer ersten Anwendungsarchitektur-Plattform und einer zweiten Anwendungsarchitektur-Plattform, wobei die erste API (351) dazu in der Lage ist, den VR-Inhalt auf der ersten Anwendungsarchitektur-Plattform auszuführen, wobei die zweite API (361) dazu in der Lage ist, die MR-Inhalte auf der zweiten Anwendungsarchitektur-Plattform auszuführen, wobei die erste Anwendungsarchitektur-Plattform und die zweite Anwendungsarchitektur-Plattform jeweils eine erste Multimedia-API und eine zweite Multimedia-API umfassen, und wobei die erste Multimedia-API und die zweite Multimedia-API eine gemeinsame Runtime (360) an jeweiligen unteren Schichten aufweisen;
Erhalten eines ersten VR-Inhalts;
Informieren der ersten API (351) über eine anzeigebezogene Einstellung des MR-Headsets (110) durch die zweite API (361);
Rendern von ersten Texturdaten (TD), die dem ersten VR-Inhalt entsprechen, gemäß der anzeigebezogenen Einstellung durch die erste API (351);
Erzeugen und Senden eines Freigabe-Handles (SH), das den ersten Texturdaten (TD) zugeordnet ist, an die zweite API (361) durch die erste API (351) über die erste Multimedia-API und die zweite Multimedia-API, die die gemeinsame Runtime (360) aufweisen; und
Anzeigen der ersten Texturdaten (TD) auf dem MR-Headset (110) durch die zweite API (361) unter Verwendung des Freigabehandles (SH).

9. MR-System (100) nach Anspruch 8, wobei die Verarbeitungsvorrichtung (120) den ersten VR-Inhalt von einer VR-Inhaltsplattform eines Drittanbieters herunterlädt.

10. MR-System (100) nach Anspruch 8, wobei die anzeigebezogene Einstellung mindestens eine Bildschirmauflösung und eine virtuelle Raumabmessung des MR-Headsets (110) umfasst.

11. MR-System (100) nach Anspruch 8, wobei die Verarbeitungsvorrichtung (120) dazu konfiguriert ist, die ersten Texturdaten (TD), die dem ersten VR-Inhalt entsprechen, gemäß der anzeigebezogenen Einstellung unter Verwendung einer 3D-Grafik-API (353) der ersten Multimedia-API durch die erste API (351) zu rendern.

12. MR-System (100) nach Anspruch 8, wobei die Verarbeitungsvorrichtung (120) dazu konfiguriert ist, das Freigabehandle (SH) unter Verwendung der 3D-Grafik-API (353) der ersten Multimedia-API durch die erste API (351) zu erzeugen und das Freigabehandle (SH) mittels der 3D-Grafik-API (353) der ersten Multimedia-API (351) über die Runtime (360) an eine 3D-Grafik-API (363) der zweiten Multimedia-API (361) zu senden.

13. MR-System (100) nach Anspruch 12, wobei die Verarbeitungsvorrichtung (120) dazu konfiguriert ist, unter Verwendung des Freigabehandles (SH) durch die 3D-Grafik-API (363) der zweiten Multimedia-API durch die zweite API (361) direkt auf die ersten Texturdaten (TD) zuzugreifen, und die ersten Texturdaten (TD) auf dem MR-Headset (110) anzuzeigen.

## Revendications

1. Procédé d'affichage d'un système de réalité mixte, MR, (100) prenant en charge des applications de réalité virtuelle, VR, dans lequel le système MR (100) comprend un dispositif de traitement (120) et un casque MR (110), dans lequel le dispositif de traitement (120) fournit une première interface de programmation d'application, API, (351) qui exécute des contenus VR et une deuxième API (361) qui exécute des contenus MR, dans lequel la deuxième API (361) est associée au casque MR (110), et dans lequel le procédé comprend :
la fourniture d'une première plate-forme d'architecture d'application et d'une deuxième plate-forme d'architecture d'application par le dispositif de traitement, dans lequel la première API (351) est apte à exécuter les contenus VR sur la première plate-forme d'architecture d'application, dans lequel la deuxième API (361) est apte à exécuter les contenus MR sur la deuxième plate-forme d'architecture d'application, dans lequel la première plate-forme d'architecture d'application et la deuxième plate-forme d'architecture d'application comprennent respectivement une première API multimédia et une deuxième API multimédia, et dans lequel la première API multimédia et la deuxième API multimédia ont un runtime commun (360) à des couches inférieures respectives ;
l'obtention d'un premier contenu VR par le dispositif de traitement (120) ;
l'information de la première API (351) en ce qui concerne un réglage relatif à l'affichage du casque MR (110) à travers la deuxième API (361) par le dispositif de traitement (120) ;
le rendu de premières données de texture (TD) correspondant au premier contenu VR en fonction du réglage relatif à l'affichage à travers la première API (351) par le dispositif de traitement (120) ;
la création et l'envoi d'un handle de partage (SH) associé aux premières données de texture (TD) à la deuxième API (361) à travers la première API (351) par l'intermédiaire de la première API multimédia et la deuxième API multimédia ayant le runtime commun (360) par le dispositif de traitement (120) ; et
l'affichage des premières données de texture (TD) du casque MR (110) à travers la deuxième API (361) par l'utilisation du handle de partage (SH) par le dispositif de traitement (120) (S210).

2. Procédé selon la revendication 1, dans lequel l'étape de l'obtention du premier contenu VR par le dispositif de traitement (120) comprend :
le téléchargement du premier contenu VR depuis une plate-forme de contenu VR d'un tiers par le dispositif de traitement (120).

3. Procédé selon la revendication 1, dans lequel le réglage relatif à l'affichage comprend au moins l'une d'une résolution d'écran et d'une mesure d'espace virtuel du casque MR (110).

4. Procédé selon la revendication 1, dans lequel l'étape du rendu des premières données de texture (TD) correspondant au premier contenu VR en fonction du réglage relatif à l'affichage à travers la première API (351) par le dispositif de traitement (120) comprend :
le rendu des premières données de texture (TD) correspondant au premier contenu VR en fonction du réglage relatif à l'affichage par l'utilisation d'une API graphique 3D (353) de la première API multimédia à travers la première API (351) par le dispositif de traitement (120).

5. Procédé selon la revendication 1, dans lequel l'étape de la création et de l'envoi du handle de partage associé aux premières données de texture à la deuxième API (361) à travers la première API (351) par le dispositif de traitement (120) comprend :
la création du handle de partage (SH) par l'utilisation de l'API graphique 3D (353) de la première API multimédia à travers la première API (351) par le dispositif de traitement (120) ; et
l'envoi du handle de partage (SH) à une API graphique 3D (363) de la deuxième API multimédia (361) par l'API graphique 3D (353) de la première API multimédia (351) par l'intermédiaire du runtime (360).

6. Procédé selon la revendication 5, dans lequel l'étape de l'affichage des premières données de texture (TD) sur le casque MR (110) à travers la deuxième API (361) par l'utilisation du handle de partage (SH) par le dispositif de traitement (120) comprend :
l'accès direct aux premières données de texture (TD) par l'utilisation du handle de partage (SH) à travers l'API graphique 3D (363) de la deuxième API multimédia à travers la deuxième API (361) et l'affichage des premières données de texture (TD) sur le casque MR (110) par le dispositif de traitement (120).

7. Procédé selon la revendication 1, dans lequel la deuxième plate-forme d'architecture d'application est une plate-forme Windows universelle (UWP), et dans lequel la première plate-forme d'architecture d'application est une plate-forme d'architecture autre que l'UWP.

8. Système de réalité mixte, MR, (100) prenant en charge des applications de réalité virtuelle, VR, le système comprenant :
un casque MR (110) ; et
un dispositif de traitement (120), dans lequel le dispositif de traitement (120) fournit une première interface de programmation d'application, API, (351) qui exécute des contenus VR et une deuxième API (361) qui exécute des contenus MR, dans lequel la deuxième API (361) est associée au casque MR (110), et dans lequel le dispositif de traitement (120) est configuré pour :
la fourniture d'une première plate-forme d'architecture d'application et d'une deuxième plate-forme d'architecture d'application, dans lequel la première API (351) est apte à exécuter les contenus VR sur la première plate-forme d'architecture d'application, dans lequel la deuxième API (361) est apte à exécuter les contenus MR sur la deuxième plate-forme d'architecture d'application, dans lequel la première plate-forme d'architecture d'application et la deuxième plate-forme d'architecture d'application comprennent respectivement une première API multimédia et une deuxième API multimédia, et dans lequel la première API multimédia et la deuxième API multimédia ont un runtime commun (360) à des couches inférieures respectives ;
l'obtention d'un premier contenu VR ;
l'information de la première API (351) en ce qui concerne un réglage relatif à l'affichage du casque MR (110) à travers la deuxième API (361) ;
le rendu de premières données de texture (TD) correspondant au premier contenu VR en fonction du réglage relatif à l'affichage à travers la première API (351) ;
la création et l'envoi d'un handle de partage (SH) associé aux premières données de texture (TD) à la deuxième API (361) à travers la première API (351) par l'intermédiaire de la première API multimédia et la deuxième API multimédia ayant le runtime commun (360) ; et
l'affichage des premières données de texture (TD) du casque MR (110) à travers la deuxième API (361) par l'utilisation du handle de partage (SH).

9. Système MR (100) selon la revendication 8, dans lequel le dispositif de traitement (120) télécharge le premier contenu VR depuis une plate-forme de contenu VR d'un tiers.

10. Système MR (100) selon la revendication 8, dans lequel le réglage relatif à l'affichage comprend au moins l'une d'une résolution d'écran et d'une mesure d'espace virtuel du casque MR (110).

11. Système MR (100) selon la revendication 8, dans lequel le dispositif de traitement (120) est configuré pour le rendu des premières données de texture (TD) correspondant au premier contenu VR en fonction du réglage relatif à l'affichage par l'utilisation d'une API graphique 3D (353) de la première API multimédia à travers la première API (351) .

12. Système MR (100) selon la revendication 8, dans lequel le dispositif de traitement (120) est configuré pour la création du handle de partage (SH) par l'utilisation de l'API graphique 3D (353) de la première API multimédia à travers la première API (351) et l'envoi du handle de partage (SH) à une API graphique 3D (363) de la deuxième API multimédia (361) par l'API graphique 3D (353) de la première API multimédia (351) par l'intermédiaire du runtime (360).

13. Système MR (100) selon la revendication 12, dans lequel le dispositif de traitement (120) est configuré pour l'accès direct aux premières données de texture (TD) par l'utilisation du handle de partage (SH) à travers l'API graphique 3D (363) de la deuxième API multimédia à travers la deuxième API (361) et l'affichage des premières données de texture (TD) sur le casque MR (110).
